# EUROPÄISCHE PATENTSCHRIFT

(11) **EP 3 224 404 B1**
(45) Veröffentlichungstag und Bekanntmachung des Hinweises auf die Patenterteilung: **04.01.2023**
(21) Anmeldenummer: 15807794.1
(22) Anmeldetag: 10.11.2015
(51) Int. Cl.: D06H 7/24, B23K 26/03, B26D 5/00, B26F 1/38, B23K 37/02, B23K 37/04, B23K 26/38, B26F 1/44, B23K 101/00, B23K 103/16, B23K 101/16

(54) **VERFAHREN ZUM AUSSCHNEIDEN VON GEGENSTÄNDEN AUS EINER ZUMINDEST TEILWEISE ZWEILAGIGEN MATERIALBAHN MITTELS EINER SCHNEIDVORRICHTUNG**
METHOD FOR CUTTING OBJECTS OUT OF AN AT LEAST PARTIALLY TWO-PLY WEB OF MATERIAL BY MEANS OF A CUTTING DEVICE
PROCÉDÉ DE DÉCOUPE D'OBJETS DANS UNE BANDE DE MATIÈRE CONSTITUÉE AU MOINS PARTIELLEMENT DE DEUX COUCHES AU MOYEN D'UN DISPOSITIF DE DÉCOUPE

(30) Priorität: 27.11.2014 DE 102014017501
(43) Veröffentlichungstag der Anmeldung: 04.10.2017
(73) Patentinhaber: Held, Gunnar, 63150 Heusenstamm (DE)
(72) Erfinder: Held, Gunnar, 63150 Heusenstamm (DE)
(74) Vertreter: Grimm, Ekkehard
(86) Internationale Anmeldenummer: PCT/EP2015/002252
(87) Internationale Veröffentlichungsnummer: WO 2016/082915

(56) Entgegenhaltungen:
- WO-A1-91/17028
- WO-A1-03/029540
- FR-A1- 2 911 807

## Beschreibung

Die vorliegende Erfindung betrifft ein Verfahren zum Ausschneiden von Gegenständen aus einer zumindest teilweise zweilagigen Materialbahn mittels einer Schneidvorrichtung gemäß dem Oberbegriff des Anspruchs 1.

Das Verfahren ist insbesondere dazu vorgesehen, beutel- oder taschenförmigen Gegenstände, wozu auch Zuschnitte für Airbags zählen, aus einer solchen zweilagigen Materialbahn auszuschneiden. Vorzugsweise wird das Verfahren in Verbindung mit einer Laserschneidvorrichtung eingesetzt.

Eine solche Materialbahn, aus der die Gegenstände ausgeschnitten werden sollen, besteht aus mindestens zwei Materiallagen, die zumindest in Umfangsbereichen des jeweiligen, auszuschneidenden Gegenstands teilweise linienförmig, streifenförmig und/oder flächig miteinander verbunden sind. Diese Verbindung kann in einer Verklebung der beiden Materialbahnen, einem Verschweißen der beiden Materialbahnen oder einem Verweben der beiden Materialbahnen bestehen. Ein Verweben der beiden Materialbahnen wird insbesondere bei der Herstellung von Airbag-Zuschnitten eingesetzt.

In einigen Anwendungsfällen, wie dies auch bei der Herstellung von Airbag-Zuschnitten der Fall ist, müssen die Teile sehr exakt ausgeschnitten werden, um alle sicherheitsrelevanten Aspekte an die Haltbarkeit der Airbags, wenn sie zum Einsatz kommen und unter hohem Druck entfaltet werden, zu erfüllen. Gerade die miteinander verwebten oder verwirkten Bereiche der beiden Materiallagen der Materialbahnen dürfen beim Ausschneiden des Airbag-Zuschnitts aus der Materialbahn nicht beschädigt und dadurch geschwächt werden. Ausgenommen hiervon sind verwebte oder verwirkte Bereiche, die die Halteösen oder Haltelaschen des Airbags bilden, die beim Ausschneiden des Airbags in ihre endgültige Form gebracht werden. Letztendlich muss der Airbag exakt entsprechend den Vorgaben ausgeschnitten werden.

Ein Problem, das bei dem Ausschneiden von Gegenständen aus einer Materialbahn, und insbesondere aus einer zweilagigen Materialbahn, vorhanden ist, ist dasjenige, dass die Materialbahnen durch den Herstellungsprozess bedingt und aufgrund des Materials und dessen Behandlung einen Verzug aufweisen, der sowohl von Materialbahn zu Materialbahn auch innerhalb einer Materialbahn sehr unterschiedlich sein kann. Werden die Gegenstände mit fest in der Schneidvorrichtung vorgegebenen Schneiddaten bezogen auf den Schneidtisch der Schneidanlage ausgeschnitten, so werden die Gegenstände durch den Verzug in der Materialbahn nicht entlang ihrer in der Materialbahn vorgegebenen Konturen ausgeschnitten.

Um einen solchen Verzug in einer Materialbahn zu erfassen, ist man dazu übergegangen, die Materialbahn während ihrer Herstellung mit Markierungen zu versehen, die in fester Zuordnung zu den auszuschneidenden Gegenständen stehen. Solche Markierungen werden in der Schneidvorrichtung optisch erfasst, um aus deren Positionen auf der Materialbahn zu ermitteln, in welchem Umfang die Materialbahn verzogen ist. Aus den Abweichungen zwischen den Soll-Positionen der Markierungen, die den Positionen der Markierungen während der Herstellung der Materialbahnen entsprechen, und den Ist-Positionen der Markierungen im Bereich der Schneidvorrichtung werden Korrekturwerte abgeleitet. Anhand dieser Korrekturwerte werden die Schneidkoordinaten zum Ausschneiden der Gegenstände korrigiert, so dass die Gegenstände trotz eines Verzugs der Materialbahn exakt entlang der vorgegebenen Konturen ausgeschnitten werden.

Als Markierungen dienen beispielsweise sich periodisch wiederholende Raster, gebildet durch Linien, die längs und quer entlang der Materialbahn verlaufen, oder Punkte oder Kreuze, die auf der Oberseite der Materialbahn erkennbar sind. Wenn es sich um eine gewebte oder gewirkte Materialbahn handelt, werden in das Material Kennfäden oder Markierungsfäden eingearbeitet, die sich farblich von der Materialbahn abheben.

Üblicherweise werden die Markierungen optisch, d. h. berührungslos, erfasst, und aus der Lage und den Positionen der Markierungen wird die Lage der Gegenstände in der Materialbahn abgeleitet, die dann den Koordinaten einer Schneidvorrichtung als Schneidkoordinaten zugeordnet werden. Der jeweilige Gegenstand wird anhand der Schneidkoordinaten mittels der Schneidvorrichtung ausgeschnitten.

Die vorstehend beschriebene Verfahrensweise setzt voraus, dass in jedem Fall die zwei- oder mehrlagige Materialbahn zuvor mit den Markierungen versehen werden muss, die auf zumindest einer Seite der Materialbahn aufgedruckt werden müssen oder die, im Fall einer gewebten oder gewirkten Materialbahn, als Kennfäden eingearbeitet werden müssen. Falls beim Bedrucken der Materialbahn oder beim Einarbeiten der Kennfäden Fehler, wie beispielsweise Unstetigkeiten, auftreten, ist eine exakte Zuordnung der auszuschneidenden Gegenstände zu diesen Markierungen nicht möglich, was zu einem Ausschuss führt. Abgesehen davon ist das Bedrucken der Materialbahn oder das Einarbeiten von Kennfäden mit zusätzlichem Aufwand und damit mit zusätzlichen Kosten bei der Herstellung der Gegenstände verbunden.

Ein Verfahren gemäß des Oberbegriffs des Anspruchs 1 ist aus FR 2911807 A1 schon bekannt.

Der vorliegenden Erfindung liegt die Aufgabe zugrunde, ein Verfahren der eingangs genannten Art anzugeben, das ein lage-genaues Ausschneiden von Gegenständen aus einer zumindest zweilagigen Materialbahn ermöglicht, ohne dass zuvor die Materialbahn mit Markierungen versehen werden muss.

Gelöst wird diese Aufgabe durch ein Verfahren mit den Merkmalen des Anspruchs 1. Vorteilhafte Ausgestaltungen des Verfahrens ergeben sich aus den abhängigen Ansprüchen.

Das Verfahren zeichnet sich dadurch aus, dass die Lage des jeweiligen auszuschneidenden Gegenstands berührungslos anhand von Strukturänderungen im Material, die Teil des Gegenstands sind, die sich aufgrund derjenigen Bereiche in der Materialbahn ergeben, die linienförmig, streifenförmig und/oder flächig miteinander verbunden sind, erfasst wird. Die Erfassung der Lage des Gegenstands in der Materialbahn wird zumindest anhand von zuvor festgelegten und gespeicherten, markanten und voneinander beabstandeten Geometrieteilformen der linienförmig, streifenförmig und/oder flächig miteinander verbundenen Bereiche des Gegenstands vorgenommen. Somit wird zumindest ein Teil der sich durch die verbundenen Flächenbereiche ergebenden Strukturen in der Materialbahn herangezogen, um die Verzerrung und Verdrehung des Gegenstands in der Materialbahn aufgrund einer Verzerrung der Materialbahn zu erkennen. Ein besonderer Vorteil des erfindungsgemäßen Verfahrens liegt darin, dass es nicht erforderlich ist, die gesamte Geometrieform des Gegenstands bzw. alle Flächenbereiche, in denen sich die verbunden Strukturen der beiden Materialbahnen befinden, zu erfassen, obwohl dies natürlich möglich wäre; allerdings würde dies den Rechenaufwand unnötig erhöhen, um die erfassten Koordinaten in die Schneidkoordinaten umzusetzen.

Vorzugsweise werden daher nur Geometrieteilformen der verbundenen Strukturen erfasst und diese Geometrieteilformen nach deren Erfassung aufgrund der gespeicherten Geometrieform des Gegenstands miteinander verbunden und/oder ergänzt. Die Geometrieteilform des Gegenstands, die den verbundenen Strukturen der beiden Materialbahnen zugeordnet ist, ist zuvor festgelegt. Insbesondere sind die Geometrieteilformen solche, die aufgrund ihrer Geometrie besonders markant sind. Solche markanten Geometrieteilformen sind beispielsweise die Bereiche, die stark gekrümmte Konturen aufweisen, laschenartige Ausbildungen, unabhängig davon, ob sich diese markanten Geometrieformen im Bereich der Außenkontur oder im Bereich eines inneren Flächenbereichs des auszuschneidenden Gegenstands befinden.

Diese markanten Geometrieformen können bereits ausreichend sein, um daraus die tatsächliche Lage des Gegenstands in der Materialbahn, wenn sie sich auf dem Schneidtisch befindet, abzuleiten, um dann den Gegenstand mit korrigierten Schneiddaten entsprechend der vorhandenen Verzerrung in der Materialbahn auszuschneiden.

Wie bereits erwähnt, können die markanten Geometrieteilformen aufgrund von gespeicherten Geometrie- und Konturdaten des Gegenstands ergänzt werden, um dann aus den ergänzten Geometrieformen des jeweiligen Gegenstands die Lage des jeweiligen Gegenstands in der Materialbahn für den Schneidvorgang zu bestimmen und anschließend entsprechend der Lage des Gegenstands die Schneidkoordinaten zuzuordnen und den Gegenstand mit den Schneidkoordinaten auszuschneiden.

Die berührungslose Erfassung der Strukturänderungen in dem Material erfolgt vorzugsweise mittels mindestens einer fotografischen Vorrichtung; dieses Verfahren ist gerade dann von Vorteil, wenn Web- oder Wirkstrukturen in dem Bereich, in dem beiden Materialbahnen verbunden sind, erfasst werden sollen. Gerade dann, wenn die fotografische Vorrichtung in einem relativ großen Abstand oberhalb der Materialbahn positioniert ist, das bedeutet in einem Abstand von bis zu 1500 mm, vorzugsweise von etwa 800 bis 1000 mm, ergeben sich fotografische Bilder, in denen die zu erfassenden Web- oder Wirkstrukturen mit einer hohen Auflösung erfasst werden.

Mehrere Einzelbilder können zu einem Gesamtbild zusammengesetzt werden, aus dem dann die Strukturänderungen in dem Material über einen großen Flächenbereich der Materialbahn erfasst werden. Diese Einzelbilder bilden eine Art eines Panoramabilds, wobei die Einzelbilder auch zweidimensional in Reihen und Zeilen aneinander gefügt werden können.

Um einen Kontrast, mit dem sich die miteinander verbundenen Bereiche der beiden Lage der Materialbahn abzeichnen, zu verstärken, wird die Materialbahn beleuchtet. Dadurch treten die Strukturänderungen noch deutlicher hervor. Diese Beleuchtung kann von der Oberseite aus erfolgen, von der aus auch die fotografischen Bilder aufgenommen werden. Es ist aber auch vorgesehen, und in bestimmten Abwendungsfällen bevorzugt, dass für die berührlose Erfassung der Strukturänderungen in dem Material die Materialbahn durchleuchtet wird, vorzugsweise von der einer fotografischen Vorrichtung gegenüberliegenden Seite der Materialbahn aus, üblicherweise die Unterseite der Materialbahn.

Es ist auch vorgesehen, die Materialbahn durch eine Scannervorrichtung eingangsseitig der Schneidvorrichtung laufen zu lassen, die in einem geringen Abstand zu der Materialbahn angeordnet berührungslos die Oberfläche der Materialbahn oder den sich beim Durchleuchten der Materialbahn, vorzugsweise von der gegenüberliegenden Seite aus, ergebenden Kontrast abscannt. Eine solche Scannervorrichtung ist einer festen Zuordnung zu dem Schneidtisch bzw. zu den Schneidkoordinaten der Schneidvorrichtung angeordnet, so dass ein Verzug in der Materialbahn und damit eine tatsächliche Lage der linienförmig, streifenförmig und/oder flächig miteinander verbundenen Bereiche des Gegenstands, zumindest Geometrieteilformen davon, erfasst werden und diese in die Koordinaten der Schneidvorrichtung übertragen werden.

Das angegebene Verfahren ermöglicht auch, dass Strukturänderungen in dem Material, die nicht den Teilen des auszuschneidenden Gegenstands zuzuordnen sind, an denen beispielsweise die zwei Materiallagen linienförmig, streifenförmig und/oder flächig miteinander verbunden sind, erfasst werden und die als mögliche Materialfehler überprüft werden können. Falls ein Materialfehler dem Bereich eines auszuschneidenden Gegenstands zugeordnet wird, wird dieser Gegenstand überprüft und entschieden, ob dieser Materialfehler für den auszuschneidenden Gegenstand nur einen optischen Aspekt oder einen anderen Aspekt, beispielsweise einen sicherheitsrelevanten Aspekt, betrifft, der nicht akzeptiert werden kann. Der als fehlerhaft erkannte Gegenstand wird dann nicht aus der Materialbahn ausgeschnitten.

Weitere Einzelheiten und Merkmale der Erfindung ergeben sich aus der nachfolgenden Beschreibung eines Ausführungsbeispieles anhand der Zeichnung. In der Zeichnung zeigt
- Figur 1: ein Flussdiagramm, bezeichnet als Hauptprogramm, das die einzelnen Verfahrensschritte des erfindungsgemäßen Verfahrens darstellt,
- Figur 2: ein Unterprogramm, das sich in das Hauptprogramm der Figur 1 einfügt,
- Figuren 3A bis 3C: einen Gegenstand, der aus einer Materialbahn ausgeschnitten werden soll, in drei Verfahrensstufen, die dem Flussdiagramm der Figur 1 zugeordnet sind,
- Figur 4: eine Schneidanlage, mit der das erfindungsgemäße Verfahren durchgeführt werden kann,
- Figur 5A: eine schematische Darstellung einer Materialbahn mit einer Vielzahl von Gegenständen, die sich in der Materialbahn durch Strukturänderungen im Material abzeichnen, und
- Figur 5B: die Gegenstände der Figur 5A, wie sie durch die Vorrichtung der Figur 4 ausgeschnitten werden.

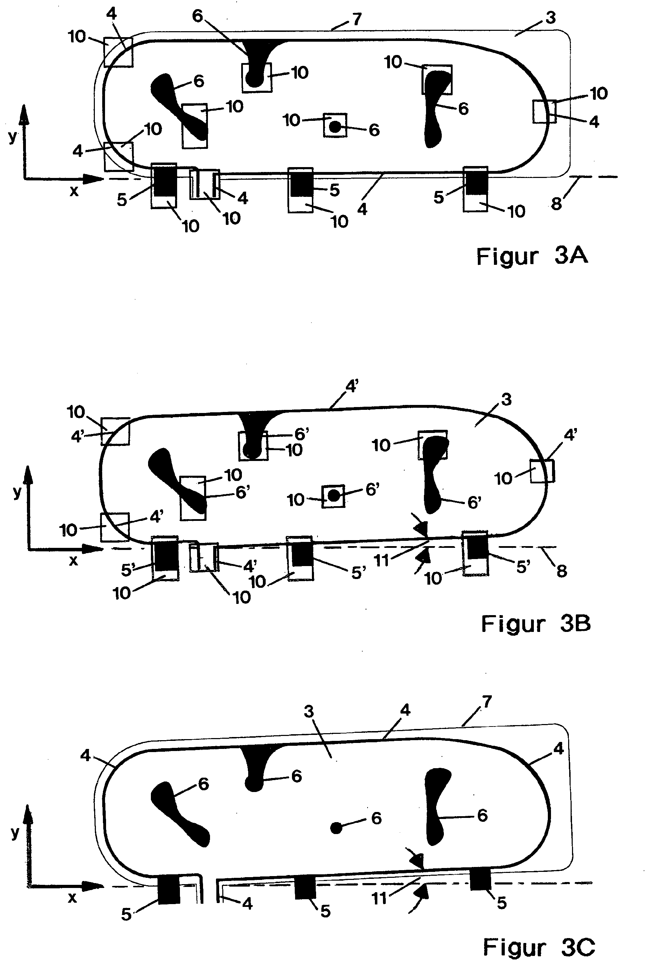

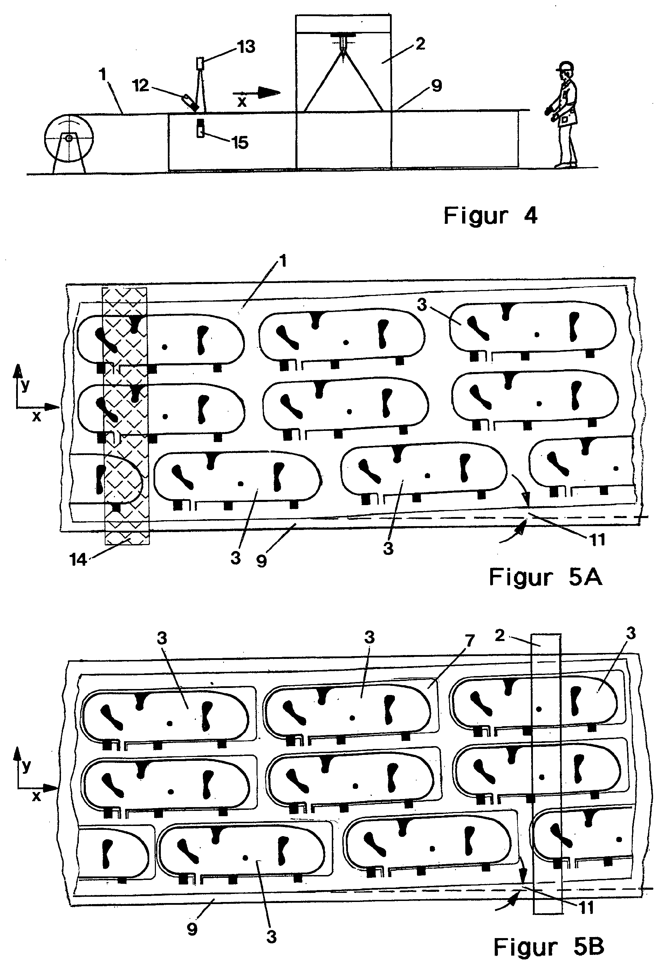

Das erfindungsgemäße Verfahren bezieht sich auf das Ausschneiden von Gegenständen aus einer zumindest teilweise zweilagigen Materialbahn 1, wie sie in den Figuren 5A und 5B dargestellt ist, mittels einer Schneidvorrichtung, die in den Figuren 4 und 5B mit dem Bezugszeichen 2 bezeichnet ist. Diese Materialbahnen 1 umfassen mindestens zwei Materiallagen, die, zumindest in Umfangsbereichen eines auszuschneidenden Gegenstands 3, teilweise linienförmig, streifenförmig und/oder flächig miteinander verbunden sind. Bei solchen Gegenständen 3 kann es sich um Beutel, Tüten, Säcke, aber auch um komplexere Teile, wie beispielsweise Airbags, handeln. Ein solcher Gegenstand 3 in Form eines Airbags ist in Figur 3A dargestellt und dessen Herstellung wird nachfolgend anhand der Figuren beschrieben.

Üblicherweise werden diese Airbags, die nachfolgend allgemein mit dem Bezugszeichen 3 bezeichnet sind, aus einer gewebten oder gewirkten Materialbahn hergestellt, die aus mindestens zwei übereinander liegenden Materiallagen besteht, die in Teilbereichen miteinander verwebt und/oder verwirkt sind. Diese verwebten oder verwirkten Bereiche des Airbags sind in den Figuren 3A bis 3C durch die schwarzen Flächen dargestellt. Diese schwarzen Flächen bilden zum Teil eine rahmenförmige Struktur, mit dem Bezugszeichen 4 bezeichnet, laschenförmige Abschnitte, die zum Teil mit der rahmenförmigen Struktur 4 verbunden sind und mit dem Bezugszeichen 5 bezeichnet sind, sowie inselförmige Abschnitte innerhalb der rahmenförmigen Struktur 4, die mit dem Bezugszeichen 6 bezeichnet sind. Zumindest die rahmenförmige Struktur 4 liegt innerhalb einer Außenkonturlinie 7 des Airbags 3, entlang der der Airbag aus der Materialbahn 1 ausgeschnitten werden soll.

Idealerweise sind die verbundenen Strukturen der Materialbahn 1 in der x-y-Richtung eines rechtwinkligen Koordinatensystems ausgerichtet, wie dies in Figur 3A, auch anhand der unterbrochenen Linie 8, angedeutet ist. Es zeigt sich jedoch, dass die Materialbahn 1 aus unterschiedlichen, z. B. herstellungsbedingten Gründen, einen Verzug oder eine Verdrehung aufweist, wenn sie über einen Schneidtisch 9 läuft, der sich beispielsweise in einer Längung oder Schrumpfung in x- und/oder y-Richtung äußern kann. Ein solcher Verzug ist deutlich in Figur 5A zu erkennen.

Um die Airbags 3 trotz der aufgrund des Verzugs der Materialbahn 1 veränderten Lage auf dem Schneidtisch 9 mittels der Schneidvorrichtung 2 auszuschneiden, muss dieser Verzug berücksichtigt werden, da ansonsten die Gefahr besteht, dass der Airbag 3 nicht entlang der Außenkonturlinie 7 ausgeschnitten wird und folglich Beschädigungen der sicherheitsrelevanten verwebten oder verwirkten Strukturen 4 und 5 im Bereich der Außenkontur des Airbags 3 auftreten können. Ausgenommen hiervon sind die laschenförmigen Abschnitte 5, die unter anderem dazu dienen, den Airbag in einem Fahrzeug zu befestigen; diese laschenförmigen Abschnitte 5, im Bereich derer die beiden Materiallagen der Materialbahn 1 miteinander verwebt oder verwirkt sind, können beim Ausschneiden des Airbags 3 in ihre endgültige Form gebracht werden.

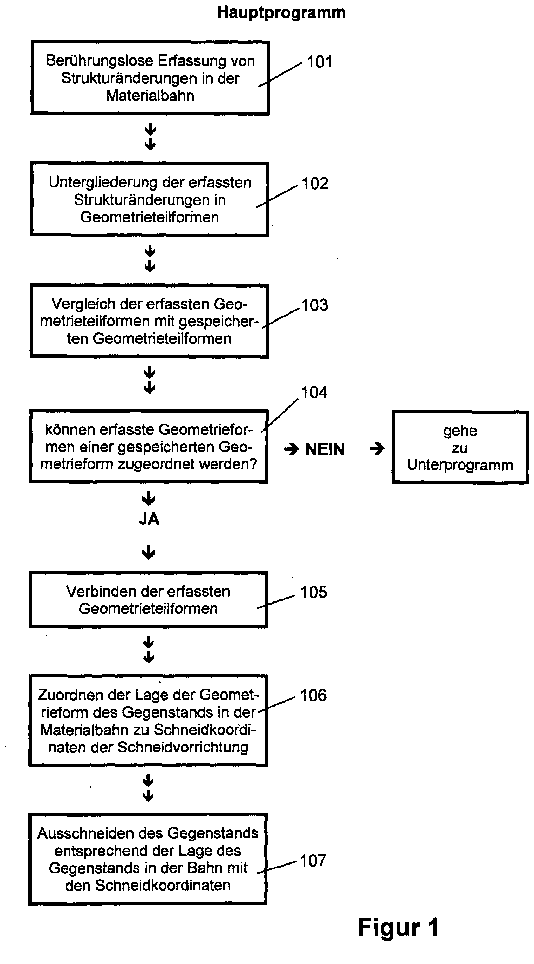

Aus vorstehenden Gründen wird das erfindungsgemäße Verfahren angewandt, dessen Ablauf in dem Flussdiagramm der Figur 1 dargestellt ist.

Nach dem erfindungsgemäßen Verfahren wird die Lage des Airbags 3 in der Materialbahn 1 durch eine berührungslose Erfassung von Strukturänderungen in der Materialbahn 1 ermittelt, wie dies durch den Schritt 101 angedeutet ist. Solche Strukturänderungen in der Materialbahn 1 ergeben sich aufgrund von Web- oder Wirkstrukturen, die auf der Oberfläche der Materialbahn 1 ersichtlich sind, im Bereich derer die beiden Materiallagen der Materialbahn 1 miteinander verwebt oder verwirkt sind. Solche Strukturänderungen könnten sich auch durch solche Bereiche der Materialbahn 1 ergeben, in denen zwei Materiallagen miteinander verklebt oder in sonstiger Weise miteinander verbunden sind.

Die Geometrie der auszuschneidenden Gegenstände 3, d.h. in dem vorliegenden Fall der auszuschneidenden Airbags, mit allen Konturdaten und Strukturierungen, beispielsweise den rahmenförmigen Strukturen 4, den laschenförmigen Abschnitten 5, den inselförmigen Abschnitten 6 sowie der Außenkonturlinie 7, die vorgegeben sind, wird in einem Schritt 102 in Geometrieteilformen untergliedert. Solche Geometrieteilformen sind in den Figuren 3A und 3B durch Rechtecke 10 markiert. Als Geometrieteilformen 10 werden bevorzugt solche geometrischen Bereiche des Airbags 3 ausgewählt, die besonders markant sind; hierunter fallen zum Beispiel die laschenförmigen Abschnitte 5, die inselförmigen Abschnitte 6, oder zumindest Teile davon, sowie die Teile der rahmenförmigen Struktur 4, die einen kleinen Krümmungsradius aufweisen.

Anhand der x-y-Koordinaten und der unterbrochenen Linie 8 ist als Beispiel angedeutet, dass die in der Materialbahn sichtbaren Strukturen aufgrund der miteinander verbundenen Bereiche der Materiallagen gegenüber den idealen Lagedaten in Figur 3A um einen Winkel 11 aufgrund eines Verzugs der Materialbahn 1 entlang des Schneidtischs 9 zu der x-Achse (siehe auch Figur 5A) verschoben ist. Ein Verzug tritt auch zu der y-Achse auf, der allerdings nicht dargestellt ist.

Im Schritt 103 wird daher ein Vergleich der Lage der erfassten Geometrieteilformen, die in Figur 3B mit den Bezugszeichen 4, 5 oder 6 bezeichnet sind, ergänzt durch einen hochgestellten Strich, mit den gespeicherten Geometrieteilformen 4, 5 oder 6 (siehe Figur 3A) verglichen.

Im Schritt 104 wird ermittelt, ob die erfassten Geometrieteilformen 4', 5', 6' einer gespeicherten Geometrieform oder gespeicherten Geometrieteilformen 4, 5, 6 zugeordnet werden können. Falls dies der Fall ist, werden in einem Schritt 105 die erfassten Geometrieteilformen 10 (4', 5', 6') rechnerisch aufgrund von hinterlegten Daten der Airbagstruktur miteinander verbunden.

Es sollte darauf hingewiesen werden, dass vorzugsweise nur ein Teil der Geometrieteilformen des Airbags 3 bzw. der Strukturen 4' und der laschenförmigen und inselförmigen Abschnitte 5', 6' erfasst werden, die mit einem Rechteck 10 gekennzeichnet sind, um dadurch den Rechenaufwand zum Ermitteln der Lage des Airbags 3 in der verzogenen Materialbahn 3 gering zu halten. Es ist aber auch möglich, die Strukturlinien, die in der Struktur der Materialbahn 1 hervortreten, insgesamt zu erfassen und deren Lage in der Materialbahn 1 zu ermitteln.

In dem Schritt 106 wird die Lage der Geometrieform des Gegenstands in der Materialbahn 1 zu Schneidkoordinaten der Schneidvorrichtung 2 zugeordnet, und schließlich wird der jeweilige Gegenstand im Schritt 107 entsprechend der Lage des Gegenstands in der Materialbahn 1 mit den Schneidkoordinaten, bei den in den Figuren dargestellten Airbags entlang der Außenkonturlinie 7, die aufgrund der gespeicherten Daten des Airbag-Zuschnitts (siehe Figur 3A) festgelegt werden können, wie dies die Figur 3C zeigt, ausgeschnitten.

Um die Strukturänderungen in der Materialbahn 1 berührungslos zu erfassen, ist einlaufseitig der Materialbahn 1 in die Schneidvorrichtung 2 ein Kamerasystem 12 angeordnet; zusätzlich wird die Materialbahn 1 quer (y-Richtung) zur Laufrichtung (x-Richtung) mit einer geeigneten Lichtquelle 13 von der Oberseite in dem in Figur 5A markierten Bereich 14 beleuchtet; es ist aber auch möglich, alternativ, oder zusätzlich, die Materialbahn 1 mit einer Lichtquelle 15 von der Unterseite 1 aus, gegenüberliegend zu dem Kammersystem 12, zu beleuchten, so dass von dem Kamerasystem 12 ein stärkerer Kontrast zwischen hellen und dunklen Flächen erfasst werden kann.

Während in den Figuren 3B und 3C die Erfassung der Lage eines einzelnen Airbags in der Materialbahn dargestellt ist, zeigen die Figuren 5A und 5B die Materialbahn 1, über deren Länge und Breite eine Vielzahl von Airbags 3, die erfasst und ausgeschnitten werden sollen, verteilt sind.

Mit dem Kamerasystem 12 kann ein größerer Bereich der Materialbahn 1 erfasst werden, indem mehrere Einzelbilder zu einem Gesamtbild zusammengesetzt werden, um die Strukturänderungen in der Materialbahn 1 zu erfassen.

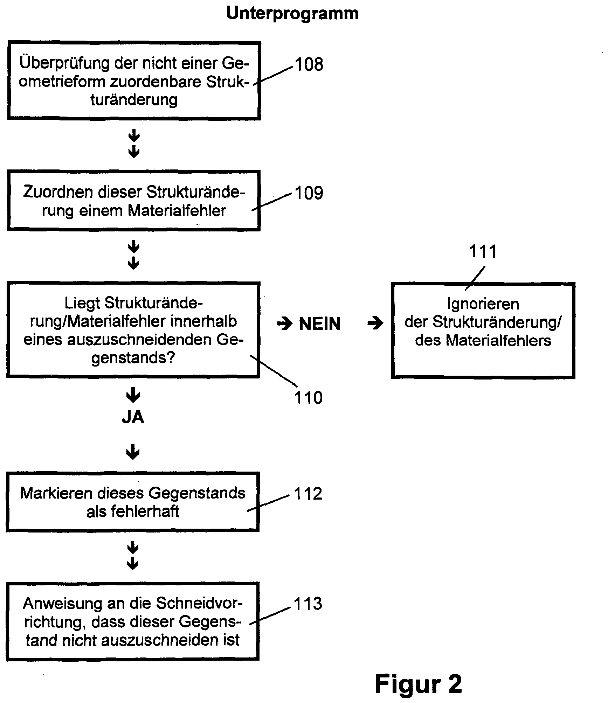

Es besteht die Möglichkeit, dass sich in dem Schritt 104 des Flussdiagramms, das in Figur 1 dargestellt ist, ergibt, dass erfasste Geometrieteilformen 10 nicht einer gespeicherten Geometrieform oder Geometrieteilform zugeordnet werden können. Falls dies der Fall ist, verzweigt das Hauptprogramm der Figur 1 zu einem Unterprogramm, das in Figur 2 dargestellt ist.

In dem Unterprogramm wird in einem Schritt 108 die nicht einer Geometrieform oder Geometrieteilform zuordenbare Strukturänderung überprüft, um zu ermitteln, wie dies Schritt 109 zeigt, ob diese Strukturänderung einem Materialfehler zugeordnet werden kann und ob diese Strukturänderung/Materialfehler innerhalb eines auszuschneidenden Gegenstands 3 liegt (Schritt 110). Falls diese Strukturänderung/Materialfehler nicht innerhalb eines auszuschneidenden Gegenstands 3 liegt, wird diese Strukturänderung/Materialfehler ignoriert (Schritt 111), da sie, außerhalb des auszuschneidenden Gegenstands 3 liegend, keinen Einfluss auf den auszuschneidenden Gegenstand 3 haben kann.

Falls im Schritt 110 ermittelt wird, dass die Strukturänderung/Materialfehler innerhalb des auszuschneidenden Gegenstands 3 liegt, wird im Schritt 112 dieser Gegenstand als fehlerhaft markiert, und die Schneidvorrichtung 1 wird im Schritt 113 angewiesen, diesen Gegenstand, da schadhaft, nicht auszuschneiden, um dadurch Maschinenlaufzeit einzusparen.

## Patentansprüche

1. Verfahren zum Ausschneiden von Gegenständen (3) aus einer zumindest teilweise zweilagigen Materialbahn (1) mittels einer Schneidvorrichtung (3), bei dem die mindestens zwei Materiallagen zumindest in Umfangsbereichen des auszuschneidenden Gegenstands (3) teilweise linienförmig, streifenförmig und/oder flächig miteinander verbunden sind, wobei zunächst berührungslos Daten ermittelt werden, die der Lage des Gegenstands (3) in der Materialbahn (1) zugeordnet sind, diese Daten den Koordinaten einer Schneidvorrichtung als Schneidkoordinaten zugeordnet werden und wobei der jeweilige Gegenstand (3) anhand der Schneidkoordinaten mittels der Schneidvorrichtung (2) ausgeschnitten wird, **dadurch gekennzeichnet, dass** die Lage des jeweiligen auszuschneidenden Gegenstands (3) berührungslos anhand von Strukturänderungen im Material, die Teil des Gegenstands (3) sind, die sich aufgrund derjenigen Bereiche in der Materialbahn (1) ergeben, die linienförmig, streifenförmig und/oder flächig miteinander verbunden sind, erfasst wird, wobei die Erfassung der Lage des Gegenstands (3) in der Materialbahn zumindest anhand von zuvor festgelegten und gespeicherten, markanten und voneinander beabstandeten Geometrieteilformen (10) der linienförmig, streifenförmig und/oder flächig miteinander verbundenen Bereiche des Gegenstands (3) vorgenommen wird.

2. Verfahren nach Anspruch 1, **dadurch gekennzeichnet, dass** die Geometrieteilformen (10) nach deren Erfassung aufgrund der gespeicherten Geometrieform des Gegenstands (3) miteinander verbunden und/oder ergänzt werden.

3. Verfahren nach Anspruch 2, **dadurch gekennzeichnet, dass** aus der ergänzten Geometrieform (10) des jeweiligen Gegenstands (3) die Lage des jeweiligen Gegenstands in der Materialbahn (1) für den Schneidvorgang bestimmt wird, um anschließend entsprechend der Lage des Gegenstands die Schneidkoordinaten zuzuordnen und den Gegenstand (3) mit den Schneidkoordinaten auszuschneiden.

4. Verfahren nach einem der Ansprüche 1 bis 3, **dadurch gekennzeichnet, dass** die berührungslose Erfassung der Strukturänderungen in dem Material mittels mindestens einer fotografischen Vorrichtung vorgenommen wird.

5. Verfahren nach einem der Ansprüche 1 bis 4, **dadurch gekennzeichnet, dass** die Strukturänderungen in dem Material aus mehreren Einzelbildern, die zu einem Gesamtbild zusammengesetzt werden, erfasst werden.

6. Verfahren nach einem der Ansprüche 1 bis 5, **dadurch gekennzeichnet, dass** für die berührlose Erfassung der Strukturänderungen in dem Material die Materialbahn (1) beleuchtet wird.

7. Verfahren nach einem der Ansprüche 1 bis 6, **dadurch gekennzeichnet, dass** für die berührlose Erfassung der Strukturänderungen in dem Material die Materialbahn (1) durchleuchtet wird.

8. Verfahren nach einem der Ansprüche 1 bis 7, **dadurch gekennzeichnet, dass** Strukturänderungen in dem Material, die erfasst werden, die nicht den Teilen des auszuschneidenden Gegenstands (3) zuzuordnen sind, an denen die zwei Materiallagen linienförmig, streifenförmig und/oder flächig miteinander verbunden sind, als mögliche Materialfehler überprüft werden.

9. Verfahren nach Anspruch 8, **dadurch gekennzeichnet, dass** Gegenständen (3), denen ein Materialfehler zugeordnet wird, nicht aus der Materialbahn (1) ausgeschnitten werden.

## Claims

1. Method for cutting out objects (3) from an at least partially two-layer material web (1) using a cutting device (2), wherein the at least two material layers are partially connected to one another in the form of lines, strips and/or surfaces at least in peripheral regions of the object (3) to be cut out, wherein initially data that are associated with the location of the object (3) in the material web (1) are determined contact free, these data are associated with the coordinates of a cutting device as the cutting coordinates and wherein the respective object (3) is cut out based on the cutting coordinates using the cutting device (2), **characterized in that** the position of the respective object (3) to be cut out is detected contact free based on structural changes in the material, which are part of the object (3), which arise based on those areas in the material web (1) that are bonded to each other in the shape of lines, strips and/or an area, wherein the detection of the position of the object (3) in the material web is carried out at least based on beforehand specified and stored distinct, spaced apart geometrical partial shapes (10) of the areas of the object (3) that are bonded to each other in the shape of lines, strips and/or an area.

2. Method as set forth in claim 1, **characterized in that** the geometrical partial shapes (10) are connected to each other and/or supplemented after detection based on the stored geometric shape of the object (3).

3. Method as set forth in claim 2, **characterized in that** the position of the respective object in the material web (1) is determined from the supplemented geometric shape (10) of the respective object (3) for the cutting procedure in order to subsequently associate the cutting coordinates according to the position of the object and to cut out the object (3) using the cutting coordinates.

4. Method as set forth in any of claims 1 to 3, **characterized in that** the contact free detection of the structural changes in the material is carried out using at least one photographic device.

5. Method as set forth in any of claims 1 to 4, **characterized in that** the structural changes in the material are detected from several individual images that are combined to a total image.

6. Method as set forth in any of claims 1 to 5, **characterized in that** the material web (1) is illuminated for the contact free detection of the structural changes in the material.

7. Method as set forth in any of claims 1 to 6, **characterized in that** the material web is trans-illuminated for the contact free detection of the structural changes in the material.

8. Method as set forth in any of claims 1 to 7, **characterized in that** structural changes in the material that are detected and are not associated with portions of the object (3) to be cut out, where two material layers are bonded with each other in the shape of lines, strips and/or an area are examined as potential material faults.

9. Method as set forth in claim 8, **characterized in that** objects (3) with an associated material fault are not cut out from the material web (1).

## Revendications

1. Procédé pour découper des objets (3) dans une bande de matériau (1) au moins en partie à deux couches au moyen d'un dispositif de coupe, dans lequel les au moins deux couches de matériau sont liées entre elles en partie sous forme de ligne, sous forme de ruban et/ou suivant la surface au moins dans des domaines périphériques de l'objet (3) à découper, où des données sont d'abord établies sans contact, qui sont attribuées à la position de l'objet (3) dans la bande de matériau (1), ces données sont attribuées aux coordonnées d'un dispositif de coupe comme coordonnées de coupe et où l'objet (3) respectif est découpé à l'aide des coordonnées de coupe au moyen du dispositif de coupe (2), **caractérisé en ce que** la position de l'objet (3) à découper respectif est détectée sans contact à l'aide de modifications de structure dans le matériau, qui font partie de l'objet (3), qui sont dues aux domaines dans la bande de matériau (1) qui sont liés entre eux sous forme de ligne, sous forme de ruban et/ou suivant la surface, où la détection de la position de l'objet (3) dans la bande de matériau est réalisée au moins à l'aide de formes partielles géométriques (10) préalablement définies et enregistrées, significatives et distantes les unes des autres des domaines de l'objet (3) liés entre eux sous forme de ligne, sous forme de ruban et/ou suivant la surface.

2. Procédé selon la revendication 1, **caractérisé en ce que** les formes partielles géométriques (10) sont liées entre elles et/ou complétées après leur détection sur la base de la forme géométrique enregistrée de l'objet (3).

3. Procédé selon la revendication 2, **caractérisé en ce qu'**à partir de la forme géométrique (10) complétée de l'objet (3) respectif la position de l'objet respectif dans la bande de matériau (1) est déterminée pour le processus de coupe, pour ensuite attribuer les coordonnées de coupe en fonction de la position de l'objet et découper l'objet (3) avec les coordonnées de coupe.

4. Procédé selon l'une des revendications 1 à 3, **caractérisé en ce que** la détection sans contact des modifications de structure dans le matériau est réalisée au moyen d'au moins un dispositif photographique.

5. Procédé selon l'une des revendications 1 à 4, **caractérisé en ce que** les modifications de structure dans le matériau sont détectées à partir de plusieurs images individuelles qui sont rassemblées en une image globale.

6. Procédé selon l'une des revendications 1 à 5, **caractérisé en ce que**, pour la détection sans contact des modifications de structure dans le matériau, la bande de matériau (1) est éclairée.

7. Procédé selon l'une des revendications 1 à 6, **caractérisé en ce que**, pour la détection sans contact des modifications de structure dans le matériau, la bande de matériau (1) est éclairée de part en part.

8. Procédé selon l'une des revendications 1 à 7, **caractérisé en ce que** les modifications de structure dans le matériau qui sont détectées, qui ne sont pas à attribuer aux parties de l'objet (3) à découper au niveau desquelles les deux couches de matériau sont liées l'une à l'autre sous forme de ligne, sous forme de ruban et/ou suivant la surface sont vérifiées comme défauts de matériau possibles.

9. Procédé selon la revendication 8, **caractérisé en ce que** les objets (3) auxquels un défaut de matériau est attribué ne sont pas découpés dans la bande de matériau (1).
